# EUROPÄISCHE PATENTSCHRIFT

(11) **EP 1 244 714 B1**
(45) Veröffentlichungstag und Bekanntmachung des Hinweises auf die Patenterteilung: **09.02.2005**
(21) Anmeldenummer: 00990706.4
(22) Anmeldetag: 11.12.2000
(51) Int. Cl.: C08F 10/00, C08F 4/64, C08F 4/02

(54) **VERFAHREN ZUR HERSTELLUNG EINES KATALYSATORFESTSTOFFS ZUR OLEFINPOLYMERISATION**
METHOD FOR PRODUCTION OF A SOLID CATALYST FOR OLEFIN POLYMERISATION
PROCEDE DE PRODUCTION D'UN CATALYSEUR SOLIDE POUR LA POLYMERISATION D'OLEFINES

(30) Priorität: 21.12.1999 DE 19962129
(43) Veröffentlichungstag der Anmeldung: 02.10.2002
(73) Patentinhaber: Basell Polyolefine GmbH, 50389 Wesseling (DE)
(72) Erfinder: SÜLING, Carsten, 67227 Frankenthal (DE); SPAETHER, Wolf, Cincinatti, Ohio 45245 (US); PACZKOWSKI Nicola, 70191 Stuttgart (DE); RÖSCH, Joachim, 67063 Ludwigshafen (DE); WULFF-DÖRING, Joachim, 67227 Frankenthal (DE); BIDELL, Wolfgang, 68159 Mannheim (DE)
(86) Internationale Anmeldenummer: PCT/EP2000/012510
(87) Internationale Veröffentlichungsnummer: WO 2001/046271

(56) Entgegenhaltungen:
- EP-A- 0 435 514
- EP-A- 0 447 070

## Beschreibung

Die vorliegende Erfindung betrifft ein Verfahren zur Herstellung eines Katalysatorfeststoffs zur Olefinpolymerisation enthaltend
A) mindestens ein Magnesiumhalogenid,
B) mindestens einen Metallocenkomplex und
C) mindestens eine metalloceniumionenbildende Verbindung.

Außerdem betrifft die Erfindung einen Katalysatorfeststoff zur Olefinpolymerisation, die Verwendung des Katalysatorfeststoffs zur Polymerisation oder Copolymerisation von Olefinen und ein verfahren zur Herstellung von Polyolefinen durch Polymerisation oder Copolymerisation von Olefinen in Gegenwart des Katalysatorfeststoffs.

Metallocene sind als Katalysatoren für die Olefinpolymerisation von großem Interesse, weil sich mit ihnen Polyolefine synthetisieren lassen, die mit herkömmlichen Ziegler-Natta-Katalysatoren nicht zugänglich sind. Beispielsweise führen Metallocenkatalysatoren zu Polymeren mit einer engen Molmassenverteilung und einen einheitlichem Comonomereinbau. Damit diese bei Polymerisationsverfahren in der Gasphase oder in Suspension allerdings erfolgreich eingesetzt werden können, ist es notwendig, daß die Metallocene in Form eines Feststoff eingesetzt werden, d.h. daß sie auf einen festen Träger aufgebracht werden.

Als feste Trägermaterialien werden häufig Kieselgele verwendet, da sich aus diesem Material poröse Partikel herstellen lassen, die in ihrer Größe als Träger für die Olefinpolymerisation geeignet sind. Besonders bewährt haben sich dabei sprühgetrocknete Kieselgele, bei denen es sich um sphärische Agglomerate aus kleineren granulären Partikel, den sogenannten Primärpartikeln, handelt.

Die Verwendung von Kieselgelen als Trägermaterial hat sich bei einigen Anwendungen jedoch als nachteilig herausgestellt. Bei der Herstellung von Folienprodukten kann es zur Bildung von Stippen kommen, die durch im Polymer verbleibende Kieselgelpartikel verursacht werden. Problematisch ist auch die Herstellung von Faserprodukten. Hierbei wird üblicherweise vor dem Verspinnen eine Schmelzefiltration durchgeführt. Enthalten die Polymerisate zu große Mengen an partikulären Katalysatorrückständen, kann sich an der Siebplatte ein Überdruck aufbauen. Dieser führt zu erheblichen prozesstechnischen Schwierigkeiten wie verkürzten Filterstandzeiten.

Ein bei den Ziegler-Natta-Katalysatoren häufig eingesetztes Trägermaterial ist Magnesiumchlorid. Es ist bekannt, daß aus diesem Material hergestellte Träger leicht fragmentieren und kaum Rückstände im Produkt hinterlassen.

Es wurden deshalb schon Versuche unternommen, Metallocenkomplexe auf Magnesiumchlorid zu trägern. In der EP-A 500 944 werden beispielsweise Metallocenkatalysatoren beschrieben, die vermahlenes wasserfreies Magnesiumchlorid enthalten.

Die EP-A 436 326 offenbart einen für die heterogene Polymerisation von Olefinen geeigneten, aus sphärischen Teilchen bestehenden Katalysatorfeststoff, wobei dieser einen Träger aus von 80 bis 99,9 Mol-% Magnesiumchlorid und von 0,1 bis 20 Mol-% wenigstens einer Elektronendonorverbindung, die kein acides Wasserstoffatom aufweist, einen zirkoniumhaltigen Metallocenkomplex und optional eine Organoaluminiumverbindung enthält. Als geeignete Elektronendonoren werden Ether, Thioether, Ester, Sulfone, Sulfoxide, sekundäre und tertiäre Amine, tertiäre Phosphine und Phosphoramide genannt. Wasser, Alkohole oder Phenol werden als Elektronendonoren explizit ausgeschlossen.

Die EP-A 435 514 beschreibt einen Katalysatorfeststoff, bei dessen Herstellung zunächst sphärische Teilchen aus von 80 bis 99,9 Mol-% Magnesiumchlorid und von 0,1 bis 20 Mol-% wenigstens einer Elektronendonorverbindung, die kein acides Wasserstoffatom aufweist, herstellt werden. Die Feststoffteilchen werden dann zunächst mit einer acide Wasserstoffatome aufweisenden Elektronendonorverbindung und anschließend mit einem zirkoniumhaltigen Metallocenkomplex und optional einer Organoaluminiumverbindung in Kontakt gebracht. Als Beispiele für Elektronendonoren mit aciden Wasserstoffatomen werden genannt Alkohol, Phenol, primäres Amid, primäres oder sekundäres Amin oder primäres oder sekundäres Phosphin.

Nachteilig bei diesen aus dem Stand der Technik bekannten, Magnesiumchlorid enthaltenden Metallocenkatalysatoren ist jedoch, daß die Morphologie der bei der Polymerisation erhaltenen Polymerpartikel noch verbesserungsfähig ist. Außerdem macht insbesondere die Verwendung verschiedener Elektronendonoren bei der Herstellung der Katalysatorfeststoffe das Herstellverfahren aufwendig.

Der vorliegenden Erfindung lag daher die Aufgabe zugrunde, den genannten Nachteilen abzuhelfen und insbesondere einen Katalysatorfeststoff zur Verfügung zu stellen, mit dem keine störenden partikulären Katalysatorrückständen im Polymerisat verbleiben, der sich nach einem wenig aufwendigen, wirtschaftlichen Verfahren herstellen läßt und mit dem es möglich ist, Polyolefine mit einer gute Polymerisatmorphologie, d.h. praktisch ohne Brocken- und Feinstaubbildung, zu polymerisieren.

Demgemäß wurde ein Verfahren zur Herstellung eines Katalysatorfeststoffs zur Olefinpolymerisation enthaltend
A) mindestens ein Magnesiumhalogenid,
B) mindestens einen Metallocenkomplex und
C) mindestens eine metalloceniumionenbildende Verbindung
gefunden, das dadurch gekennzeichnet ist, daß man
i) zunächst nur aus dem Magnesiumhalogenid A) und einem C₁-C₈-Alkanol bestehende feinteilige Trägerpartikel mit einem mittleren Teilchendurchmesser von 1 bis 200 µm aus einem Addukt aus dem Magnesiumhalogenid A) und dem C₁-C₈-Alkanol herstellt, wobei dieses pro Mol Magnesiumhalogenid von 1,5 bis 5 mol des C₁-C₈-Alkanols enthält,
ii) dann die metalloceniumionenbildende Verbindung C) auf den feinteiligen Trägerpartikeln abscheidet und
iii) danach das hierbei erhaltene Reaktionsprodukt mit dem Metallocenkomplex B) in Kontakt bringt.

Weiterhin wurden ein Katalysatorfeststoff zur Olefinpolymerisation, die Verwendung des Katalysatorfeststoffs zur Polymerisation oder Copolymerisation von Olefinen und ein Verfahren zur Herstellung von Polyolefinen durch Polymerisation oder Copolymerisation von Olefinen in Gegenwart des Katalysatorfeststoffs gefunden.

Die nach dem erfindungsgemäßen Verfahren hergestellten Katalysatorfeststoffe eignen sich insbesondere zur Polymerisation von Olefinen und vor allem zur Polymerisation von α-Olefine, d.h. Kohlenwasserstoffen mit endständigen Doppelbindungen. Geeignete Monomere können funktionalisierte olefinisch ungesättigte Verbindungen wie Ester- oder Amidderivate der Acryl- oder Methacrylsäure, beispielsweise Acrylate, Methacrylate oder Acrylnitril sein. Bevorzugt sind unpolare olefinische Verbindungen, worunter auch arylsubstituierte α-Olefine fallen. Besonders bevorzugte α-Olefinen sind lineare oder verzweigte C₂-C₁₂-Alk-1-ene, insbesondere lineare C₂-C₁₀-Alk-1-ene wie Ethylen, Propylen, But-1-en, Pent-1-en, Hex-1-en, Hept-1-en, Oct-1-en, Non-1-en, Dec-1-en oder 4-Methyl-pent-1-en oder unsubstituierte oder substituierte vinylaromatische Verbindung wie Styrol, p-Methylstyrol, p-Chlorstyrol, 2,4-Dimethylstyrol, 4-Vinylbiphenyl, Vinylnaphthalin oder Vinylanthracen. Es können auch Gemische aus verschiedenen α-Olefinen polymerisiert werden.

Insbesondere lassen sich die erfindungsgemäßen Katalysatorfeststoffe zur Polymerisation oder Copolymerisation von Ethylen oder Propylen einsetzen. Als Comonomere bei der Ethylenpolymerisation werden bevorzugt C₃-C₈-α-Olefine, insbesondere Buten, Penten, Hexen und/oder Octen verwendet. Bevorzugte Comonomere bei der Propylenpolymerisation sind Ethylen und/oder Buten.

Als Trägermaterialien können bei der Herstellung des Katalysatorfeststoffs verschiedene Magnesiumhalogenide A) wie Magnesiumchlorid, Magnesiumbromid oder Magnesiumjodid zum Einsatz kommen. Besonders bevorzugt ist die Verwendung von Magnesiumchlorid.

Als Komponente B) geeignete Metallocenkomplex sind solche der allgemeinen Formel (I) 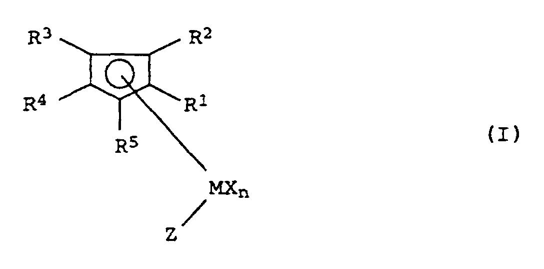 in der die Substituenten und Indizes folgende Bedeutung haben:
- M: Titan, Zirkonium, Hafnium, vanadium, Niob oder Tantal, sowie Elemente der III. Nebengruppe des Periodensystems und der Lanthanoiden,
- X: Fluor, Chlor, Brom, Iod, Wasserstoff, C₁-C₁₀-Alkyl, C₆-C₁₅-Aryl, Alkylaryl mit 1 bis 10 C-Atomen im Alkylrest und 6 bis 20 C-Atomen im Arylrest, -OR⁶ oder -NR⁶R⁷,
- n: 1, 2 oder 3, wobei n der Wertigkeit von M minus der Zahl 2 entspricht,
wobei
- R⁶ und R⁷: C₁-C₁₀-Alkyl, C₆-C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeuten und
die Reste X gleich oder verschieden sind,
- R¹ bis R⁵: Wasserstoff, C₁-C₁₀-Alkyl, 5- bis 7-gliedriges Cycloalkyl, das seinerseits durch C₁-C₁₀-Alkyl substituiert sein kann, C₆-C₁₅-Aryl oder Arylalkyl, wobei auch zwei benachbarte Reste gemeinsam für 4 bis 15 C-Atome aufweisende gesättigte oder ungesättigte cyclische Gruppen stehen können, oder Si(R⁸)₃ mit
- R⁸: C₁-C₁₀-Alkyl, C₃-C₁₀-Cycloalkyl oder C₆-C₁₅-Aryl sein kann und
- Z: für X oder 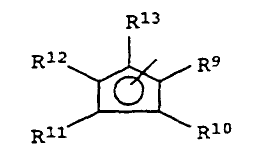 steht,
wobei die Reste
- R⁹ bis R¹³: Wasserstoff, C₁-C₁₀-Alkyl, 5- bis 7-gliedriges Cycloalkyl, das seinerseits durch C₁-C₁₀-Alkyl substituiert sein kann, C₆-C₁₅-Aryl oder Arylalkyl bedeuten und wobei auch zwei benachbarte Reste gemeinsam für 4 bis 15 C-Atome aufweisende gesättigte oder ungesättigte cyclische Gruppen stehen können, oder Si(R¹⁴)₃ mit
- R¹⁴: C₁-C₁₀-Alkyl, C₃-C₁₀-Cycloalkyl oder C₆-C₁₅-Aryl bedeuten,
oder wobei die Reste R⁴ und Z gemeinsam eine Gruppierung -R¹⁵-Abilden, in der
- R¹⁵: 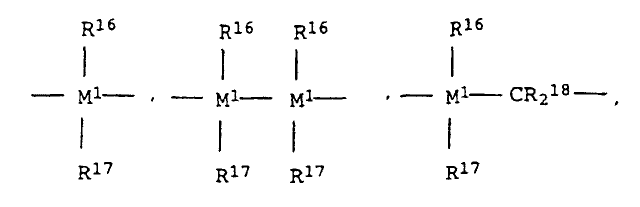 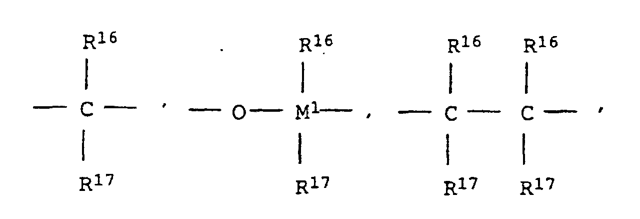 = BR¹⁶, = AlR¹⁶, -Ge-, -Sn-, -O-, -S-, = SO, = SO₂,
= NR¹⁶, = CO, = PR¹⁶ oder = P(O)R¹⁶ ist,
wobei
- R¹⁶, R¹⁷ und R¹⁸: gleich oder verschieden sind und jeweils ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder wobei zwei benachbarte Reste jeweils mit den sie verbindenden Atomen einen 4 bis 15 C-Atome aufweisenden gesättigten oder ungesättigten Ring bilden, und
- M¹: Silicium, Germanium oder Zinn ist,
- A: -O-, -S-, 〉NR¹⁹ oder 〉PR¹⁹ bedeuten,
mit
- R¹⁹: C₁-C₁₀-Alkyl, C₆-C₁₅-Aryl, C₃-C₁₀-Cycloalkyl, C₇-C₁₈-Alkylaryl oder Si (R²⁰)₃,
- R²⁰: Wasserstoff, C₁-C₁₀-Alkyl, C₆-C₁₅-Aryl, das seinerseits mit C₁-C₄-Alkylgruppen substituiert sein kann oder C₃-C₁₀-Cycloalkyl
oder wobei die Reste R⁴ und R¹² gemeinsam eine Gruppierung -R¹⁵bilden.

Bevorzugt sind die Reste X in der allgemeinen Formel (I) gleich.

Von den Metallocenkomplexen der allgemeinen Formel (I) sind 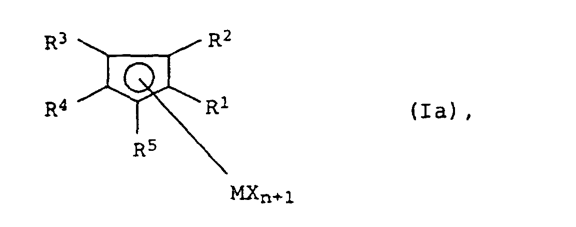 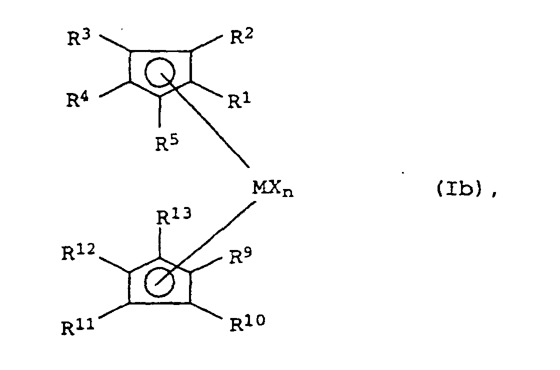 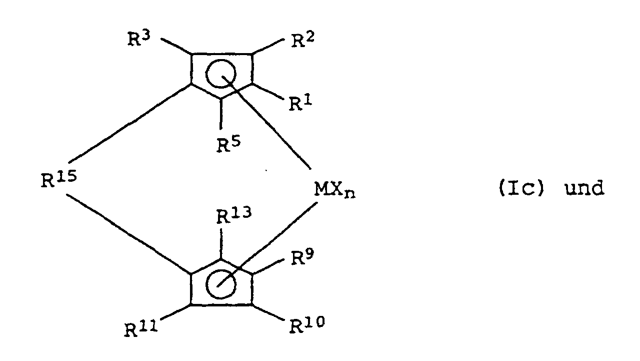 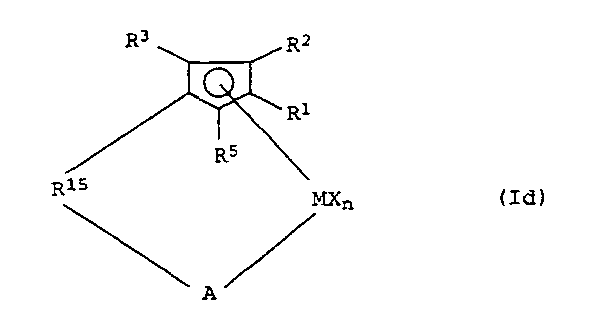 bevorzugt.

Von den Verbindungen der Formel (Ia) sind insbesondere diejenigen bevorzugt, in denen
- M: Titan, Zirkonium oder Hafnium,
- X: Chlor, C₁-C₄-Alkyl oder Phenyl,
- n: die Zahl 2 und
- R¹ bis R⁵: Wasserstoff oder C₁-C₄-Alkyl bedeuten.

Von den Verbindungen der Formel (Ib) sind als bevorzugt diejenigen zu nennen, bei denen
- M: für Titan, Zirkonium oder Hafnium steht,
- X: Chlor, C₁-C₄-Alkyl oder Phenyl,
- n: die Zahl 2,
- R¹ bis R⁵: Wasserstoff, C₁-C₄-Alkyl oder Si(R⁸)₃ und
- R⁹ bis R¹³: Wasserstoff, C₁-C₄-Alkyl oder Si(R¹⁴)₃ bedeuten.

Insbesondere sind die Verbindungen der Formel (Ib) geeignet, in denen die Cyclopentadienylreste gleich sind.

Beispiele für besonders geeignete Verbindungen sind u.a.:
Bis (cyclopentadienyl)zirkoniumdichlorid,
Bis(pentamethylcyclopentadienyl)zirkoniumdichlorid,
Bis(methylcyclopentadienyl)zirkoniumdichlorid,
Bis(ethylcyclopentadienyl)zirkoniumdichlorid,
Bis (n-butylcyclopentadienyl)zirkoniumdichlorid und
Bis (trimethylsilylcyclopentadienyl)zirkoniumdichlorid
sowie die entsprechenden Dimethylzirkoniumverbindungen.

Von den Verbindungen der Formel (Ic) sind diejenigen besonders geeignet, in denen
- R¹ und R⁹: gleich sind und für Wasserstoff oder C₁-C₁₀-Alkylgruppen stehen,
- R⁵ und R¹³: gleich sind und für Wasserstoff, eine Methyl-, Ethyl-, iso-Propyl- oder tert.-Butylgruppe stehen,
- R³ und R¹¹: C₁-C₄-Alkyl und
- R² und R¹⁰: Wasserstoff bedeuten
oder
zwei benachbarte Reste R² und R³ sowie R¹⁰ und R¹¹ gemeinsam für 4 bis 12 C-Atome aufweisende gesättigte oder ungesättigte cyclische Gruppen stehen,
- R¹⁵: für 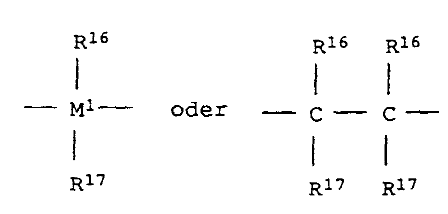 steht,
- M: für Titan, Zirkonium oder Hafnium und
- X: für Chlor, C₁-C₄-Alkyl oder Phenyl stehen.

Beispiele für besonders geeignete Komplexverbindungen (Ic) sind u.a.
Dimethylsilandiylbis(cyclopentadienyl)zirkoniumdichlorid,
Dimethylsilandiylbis(indenyl)zirkoniumdichlorid,
Dimethylsilandiylbis(tetrahydroindenyl)zirkoniumdichlorid,
Ethylenbis(cyclopentadienyl)zirkoniumdichlorid,
Ethylenbis(indenyl)zirkoniumdichlorid,
Ethylenbis(tetrahydroindenyl)zirkoniumdichlorid,
Tetramethylethylen-9-fluorenylcyclopentadienylzirkoniumdichlorid,
Dimethylsilandiylbis(3-tert.butyl-5-methylcyclopentadienyl)-zirkoniumdichlorid,
Dimethylsilandiylbis(3-tert.butyl-5-ethylcyclopentadienyl)-zirkoniumdichlorid,
Dimethylsilandiylbis(2-methylindenyl)zirkoniumdichlorid,
Dimethylsilandiylbis(2-isopropylindenyl)zirkoniumdichlorid,
Dimethylsilandiylbis(2-tert.butylindenyl)zirkoniumdichlorid, Diethylsilandiylbis(2-methylindenyl) zirkoniumdibromid,
Dimethylsilandiylbis(3-methyl-5-methylcyclopentadienyl)-zirkoniumdichlorid,
Dimethylsilandiylbis(3-ethyl-5-isopropylcyclopentadienyl)-zirkoniumdichlorid,
Dimethylsilandiylbis(2-ethylindenyl)zirkoniumdichlorid,
Dimethylsilandiylbis(2-methyl-4,5-benzindenyl)zirkoniumdichlorid
Dimethylsilandiylbis(2-ethyl-4,5-benzindenyl)zirkoniumdichlorid
Methylphenylsilandiylbis(2-methyl-4,5-benzindenyl)-zirkoniumdichlorid,
Methylphenylsilandiylbis(2-ethyl-4,5-benzindenyl)-zirkoniumdichlorid,
Diphenylsilandiylbis(2-methyl-4,5-benzindenyl)zirkoniumdichlorid,
Diphenylsilandiylbis(2-ethyl-4,5-benzindenyl)zirkoniumdichlorid
und Diphenylsilandiylbis(2-methylindenyl)hafniumdichlorid
sowie die entsprechenden Dimethylzirkoniumverbindungen.

weitere Beispiele für geeignete Komplexverbindungen sind u.a.
Dimethylsilandiylbis(2-methyl-4-phenylindenyl)zirkoniumdichlorid,
Dimethylsilandiylbis(2-ethyl-4-phenylindenyl)zirkoniumdichlorid,
Dimethylsilandiylbis(2-methyl-4-naphthylindenyl)zirkoniumdichlorid,
Dimethylsilandiylbis(2-methyl-4-isopropylindenyl)zirkoniumdichlorid,
Dimethylsilandiylbis(2-methyl-4,6-diisopropylindenyl)zirkoniumdichlorid,
Dimethylsilandiylbis(2-methyl-4-[4'-tert.butylphenyl]indenyl)-zirkoniumdichlorid,
Dimethylsilandiylbis(2-ethyl-4-[4'-tert.butylphenyl)indenyl)-zirkoniumdichlorid und
Dimethylsilandiylbis(2-propyl-4-[4'-tert.butylphenyl]indenyl)-zirkoniumdichlorid
sowie die entsprechenden Dimethylzirkoniumverbindungen.

Bei den Verbindungen der allgemeinen Formel (Id) sind als besonders geeignet diejenigen zu nennen, in denen
- M: für Titan oder Zirkonium,
- X: für Chlor, C₁-C₄-Alkyl oder Phenyl stehen,
- R¹⁵: für 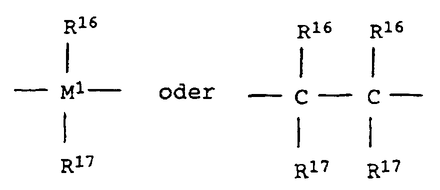 steht,
- A: für -O- , -S- , 〉NR¹⁹
und
- R¹ bis R³ und R⁵: für Wasserstoff, C₁-C₁₀-Alkyl, C₃-C₁₀-Cycloalkyl, C₆-C₁₅-Aryl oder Si(R⁸)₃ stehen, oder wobei zwei benachbarte Reste für 4 bis 12 C-Atome aufweisende cyclische Gruppen stehen.

Die Synthese derartiger Komplexverbindungen kann nach an sich bekannten Methoden erfolgen, wobei die Umsetzung der entsprechend substituierten, cyclischen Kohlenwasserstoffanionen mit Halogeniden von Titan, Zirkonium, Hafnium, Vanadium, Niob oder Tantal, bevorzugt ist.

Beispiele für entsprechende Herstellungsverfahren sind u.a. im Journal of Organometallic Chemistry, 369 (1989), 359-370 beschrieben.

Als Komponente B) können auch Mischungen verschiedener Metallocenkomplexe eingesetzt werden.

Weiterhin enthält der Katalysatorfeststoff als Komponente C) mindestens eine metalloceniumionenbildende Verbindung.

Geeignete metalloceniumionenbildende Verbindungen C) sind beispielsweise starke, neutrale Lewissäuren, ionische Verbindungen mit lewissauren Kationen oder ionische Verbindungen mit Brönsted-Säuren als Kationen.

Als starke, neutrale Lewissäuren sind Verbindungen der allgemeinen Formel (II)

M²X¹X²X³ (II)

bevorzugt, in der
- M²: ein Element der III. Hauptgruppe des Periodensystems bedeutet, insbesondere B, Al oder Ga, vorzugsweise B,
- X¹, X² und X³: für Wasserstoff, C₁-C₁₀-Alkyl, C₆-C₁₅-Aryl, Alkylaryl, Arylalkyl, Halogenalkyl oder Halogenaryl mit jeweils 1 bis 10 C-Atomen im Alkylrest und 6 bis 20 C-Atome im Arylrest oder Fluor, Chlor, Brom oder Jod stehen, insbesondere für Halogenaryle, vorzugsweise für Pentafluorphenyl.

Besonders bevorzugt sind Verbindungen der allgemeinen Formel (II), in der X¹, X² und X³ gleich sind, vorzugsweise Tris(pentafluorphenyl)boran.

Als ionische Verbindungen mit lewissauren Kationen sind Verbindungen der allgemeinen Formel (III)

[(Y^{a+})Q₁Q₂...Q_{z}]^{d+} (III)

geeignet, in denen
- y: ein Element der I. bis VI. Hauptgruppe oder der I. bis VIII. Nebengruppe des Periodensystems bedeutet,
- Q₁ bis Q_{z}: für einfach negativ geladene Reste wie C₁-C₂₈-Alkyl, C₆-C₁₅-Aryl, Alkylaryl, Arylalkyl, Halogenalkyl, Halogenaryl mit jeweils 6 bis 20 C-Atomen im Aryl- und 1 bis 28 C-Atome im Alkylrest, C₃-C₁₀-Cycloalkyl, welches gegebenenfalls mit C₁-C₁₀-Alkylgruppen substituiert sein kann, Halogen, C₁-C₂₈-Alkoxy, C₆-C₂₅-Aryloxy, Silyl- oder Mercaptylgruppen
- a: für ganze Zahlen von 1 bis 6 und
- z: für ganze Zahlen von 0 bis 5 steht,
- d: der Differenz a-z entspricht, wobei d jedoch größer oder gleich 1 ist.

Besonders geeignet sind Carboniumkationen, Oxoniumkationen und Sulfoniumkationen sowie kationische Übergangsmetallkomplexe. Insbesondere sind das Triphenylmethylkation, das Silberkation und das 1,1'-Dimethylferrocenylkation zu nennen. Bevorzugt besitzen sie nicht-koordinierende Gegenionen, insbesondere Borverbindungen, wie sie auch in der WO 91/09882 genannt werden, bevorzugt Tetrakis(pentafluorophenyl)borat.

Ionische Verbindungen mit Brönsted-Säuren als Kationen und vorzugsweise ebenfalls nicht-koordinierende Gegenionen sind in der WO 91/09882 genannt, bevorzugtes Kation ist das N,N-Dimethylanilinium.

Die Menge an starken, neutralen Lewissäuren, ionischen Verbindungen mit lewissauren Kationen oder ionischen Verbindungen mit Brönsted-Säuren als Kationen beträgt bevorzugt 0,1 bis 10 Äquivalente, bezogen auf den Metallocenkomplex B).

Geeignete metalloceniumionenbildende Verbindungen C) sind auch die in der WO 99/06414 offenbarten Bor-Aluminium-Verbindungen wie beispielsweise Di- [bis(pentafluorphenylboroxy)]methylalan.

Besonders geeignet als metalloceniumionenbildende Verbindungen C) sind offenkettige oder cyclische Alumoxanverbindungen der allgemeinen Formeln (IV) oder (V) 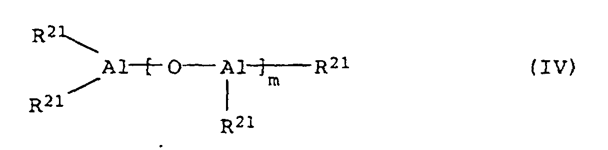 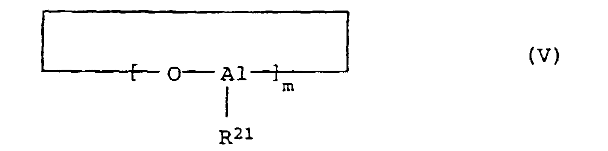 wobei
- R²¹: eine C₁-C₄-Alkylgruppe bedeutet, bevorzugt eine Methyl- oder Ethylgruppe und m für eine ganze Zahl von 5 bis 30, bevorzugt 10 bis 25 steht.

Die Herstellung dieser oligomeren Alumoxanverbindungen erfolgt üblicherweise durch Umsetzung einer Lösung von Trialkylaluminium mit Wasser und ist u.a. in der EP-A 284 708 und der US-A 4 794 096 beschrieben.

In der Regel liegen die dabei erhaltenen oligomeren Alumoxanverbindungen als Gemische unterschiedlich langer, sowohl linearer als auch cyclischer Kettenmoleküle vor, so daß m als Mittelwert anzusehen ist. Die Alumoxanverbindungen können auch im Gemisch mit anderen Metallalkylen, bevorzugt mit Aluminiumalkylen vorliegen.

Es hat sich als vorteilhaft erwiesen, die Metallocenkomplexe B) und die oligomeren Alumoxanverbindungen der allgemeinen Formeln (IV) oder (V) in solchen Mengen zu verwenden, daß das atomare Verhältnis zwischen Aluminium aus den oligomeren Alumoxanverbindungen und dem Übergangsmetall aus den Metallocenkomplexen im Bereich von 10:1 bis 10⁶:1, insbesondere im Bereich von 10:1 bis 10⁴:1, liegt.

Weiterhin können als Komponente C) anstelle der Alumoxanverbindungen der allgemeinen Formeln (IV) oder (V) Aryloxyalumoxane, wie in der US-A 5 391 793 beschrieben, Aminoaluminoxane, wie in der US-A 5 371 260 beschrieben, Aminoaluminoxanhydrochloride, wie in der EP-A 633 264 beschrieben, Siloxyaluminoxane, wie in der EP-A 621 279 beschrieben, oder Mischungen daraus eingesetzt werden.

Vorzugsweise werden sowohl die Metallocenkomplexe B) als auch die metalloceniumionenbildende Verbindungen C) in Lösung eingesetzt, wobei aromatische Kohlenwasserstoffe mit 6 bis 20 C-Atomen, insbesondere Xylole und Toluol, besonders bevorzugt sind.

Der Katalysatorfeststoff kann als weitere Komponente D) zusätzlich noch eine Metallverbindung der allgemeinen Formel (VI)

M³ (R²²)ᵣ (R²³)ₛ (R²⁴)ₜ (VI)

in der
- M³: ein Alkali-, ein Erdalkalimetall oder ein Metall der III. Hauptgruppe des Periodensystems, d.h. Bor, Aluminium, Gallium, Indium oder Thallium bedeutet,
- R²²: Wasserstoff, C₁-C₁₀-Alkyl, C₆-C₁₅-Aryl, Alkylaryl oder Arylalkyl mit jeweils 1 bis 10 C-Atomen im Alkylrest und 6 bis 20 C-Atomen im Arylrest,
- R²³ und R²⁴: Wasserstoff, Halogen, C₁-C₁₀-Alkyl, C₆-C₁₅-Aryl, Alkylaryl, Arylalkyl oder Alkoxy mit jeweils 1 bis 10 C-Atomen im Alkylrest und 6 bis 20 C-Atomen im Arylrest,
- r: eine ganze Zahl von 1 bis 3
und
- s und t: ganze Zahlen von 0 bis 2 bedeuten, wobei die Summe r+s+t der Wertigkeit von M³ entspricht,
enthalten, wobei die Komponente D) nicht identisch ist mit der Komponente C).

Von den Metallverbindungen der allgemeinen Formel (VI) sind diejenigen bevorzugt, in denen
- M³: Lithium, Magnesium oder Aluminium bedeutet und
- R²³ und R²⁴: für C₁-C₁₀-Alkyl stehen.

Besonders bevorzugte Metallverbindungen der Formel (VI) sind n-Butyl-Lithium, n-Butyl-n-octyl-Magnesium, n-Butyl-n-heptyl-Magnesium, Tri-n-hexyl-aluminium, Tri-iso-butyl-aluminium, Triethylaluminium und Trimethylaluminium.

Wenn eine Metallverbindung D) eingesetzt wird, ist sie bevorzugt in einer solchen Menge im Katalysatorfeststoff enthalten, daß das molare Verhältnis von M³ aus Formel (VI) zu Übergangsmetall M aus Formel (I) von 800:1 bis 1:1, insbesondere 500:1 bis 50:1, beträgt.

Das erfindungsgemäße Verfahren zur Herstellung des Katalysatorfeststoffs ist dadurch charakterisiert, daß man zunächst in einem ersten verfahrensschritt i) feinteilige Trägerpartikel aus einem Addukt aus dem Magnesiumhalogenid A) und einem C₁-C₈-Alkanol herstellt. Hierdurch wird eine optimale Verteilung von Magnesiumhalogenid und C₁-C₈-Alkanol erreicht.

Besonders geeignete C₁-C₈-Alkanole sind beispielsweise Methanol, Ethanol, n-Propanol oder n-Butanol. Bevorzugt wird Ethanol verwendet.

Die Herstellung dieser feinteiligen Trägerpartikel an sich ist bekannt und kann beispielsweise dadurch erfolgen, daß man wasserfreies Magnesiumhalogenid mit dem C₁-C₈-Alkanol in einer inerten Flüssigkeit, in der sie nicht löslich sind, suspendiert und erwärmt. Geeignete Suspensionsmittel sind hierbei Paraffinöle, Silikonöle oder deren Mischungen. Üblicherweise erhitzt man bis auf Temperaturen von 50 bis 140°C, bevorzugt 100 bis 120°C. Die sich dabei in der Regel bildenden, geschmolzen vorliegenden Addukte werden in der Flüssigkeit unter heftigem Rühren dispergiert und dann, bevorzugt durch Einleiten in eine Flüssigkeit mit niedriger Temperatur, schnell abgekühlt. Solche Verfahren werden beispielsweise in der US-A 4 469 648 beschrieben.

Der mittlere Teilchendurchmesser der im erfindungsgemäßen Verfahren eingesetzten, feinteiligen Trägerpartikel beträgt von 1 bis 200 µm, bevorzugt von 15 bis 90 µm und insbesondere von 20 bis 75 µm. Die Trägerpartikel besitzen darüber hinaus bevorzugt eine spezifische Oberfläche im Bereich von 100 bis 350 m²/g, vorzugsweise im Bereich von 150 bis 250 m²/g, und ein Porenvolumen im Bereich von 0,1 ml/g bis 0,7 ml/g, vorzugsweise im Bereich von 0,15 ml/g bis 0,4 ml/g. Die spezifische Oberfläche und das Porenvolumen können nach der Methode der Stickstoffadsorption nach DIN 66131 oder Quecksilber-Porosimetrie nach DIN 66133 bestimmt werden.

Der Gehalt an C₁-C₈-Alkanol in den feinteiligen Trägerpartikeln wird auf eine Bereich von 1,5 bis 5, bevorzugt von 1,8 bis 3,5 und insbesondere von 1,9 bis 2,5 mol C₁-C₈-Alkanol pro Mol Magnesiumhalogenid eingestellt. Hierbei ist es zum Beispiel möglich, durch Anlegen eines Unterdrucks und/oder Erwärmen der Trägerpartikel den Alkoholgehalt bis zum gewünschten Gehalt zur erniedrigen.

Auf die feinteiligen Trägerpartikel wird dann im Schritt ii) die metalloceniumionenbildende Verbindung C) oder, falls auch zusätzlich eine Metallverbindung D) eingesetzt wird, diese oder eine Mischung aus metalloceniumionenbildender Verbindung C) und Metallverbindung D) abgeschieden. Hierbei beträgt die Menge an abgeschiedener Verbindung C) und/oder D) mindestens 1 Mol pro Mol C₁-C₈-Alkanol.

Anschließend wird im Verfahrensschritt iii) das erhaltene Reaktionsprodukt mit dem Metallocenkomplex B) in Kontakt gebracht, wobei gleichzeitig noch zusätzlich eine Metallverbindung D) zugegeben werden kann. Falls bereits im Schritt ii) eine Metallverbindung D) zugegeben worden ist, kann es sich bei der im Schritt iii) verwendeten um die selbe oder um eine andere Metallverbindung D) handeln. Falls im Verfahrensschritt ii) nur Metallverbindungen D) und keine metalloceniumionenbildenden Verbindungen C) eingesetzt wurden, werden im Schritt iii) sowohl der Metallocenkomplex B) auch die metalloceniumionenbildende Verbindung C) mit dem Reaktionsprodukt des Schritts ii) in Kontakt gebracht. Dabei können die Komponenten B) und C) jeweils getrennt zugegeben werden. Es ist jedoch auch möglich, zunächst B) und C) in Kontakt zu bringen und erst danach die Mischung zum Reaktionsprodukt des Schritts ii) zuzugeben.

Der Schritt iii) kann durchgeführt werden, indem man alle Komponenten in Lösung bzw. in Suspension miteinander mischt und anschließend das Lösungsmittel abzieht. Die Kontaktierung der feinteiligen Trägerpartikel mit dem Metallocenkomplex B) kann jedoch auch nach ein Tränkverfahren, wie es z.B. in der deutschen Patentanmeldung Nr. 19833170.3 beschrieben ist, durchgeführt werden.

In einer besonders bevorzugten Ausführungsform für das erfindungsgemäße Erfahren werden in Schritt ii) als metalloceniumionenbildende Verbindungen C) Alumoxanverbindungen der allgemeinen Formeln (IV) oder (V), optional zusammen mit einem Metallverbindung D), zugesetzt und in Schritt iii) das Reaktionsprodukt aus Metallocenkomplex B) und einer weiteren Menge der Alumoxanverbindungen der allgemeinen Formeln (IV) oder (V) zugegeben.

Der nach dem erfindungsgemäßen Verfahren erhältliche Katalysatorfeststoff eignet sich dazu, in der Regel zusammen mit weiterer Metallverbindung D), wobei diese sich von der oder den bei der Herstellung des Katalysatorfeststoffs verwendeten Metallverbindungen D) unterscheiden kann, als Katalysator zur Polymerisation oder Copolymerisation von Olefinen eingesetzt zu werden.

Es ist auch möglich, den Katalysatorfeststoff zunächst vorzupolymerisieren und dann den resultierenden vorpolymerisierten Katalysatorfeststoff bei der eigentlichen Polymerisation zu verwenden.

Die Polymerisation kann in bekannter Weise in Masse, in Suspension oder in der Gasphase in den üblichen, für die Polymerisation von Olefinen verwendeten Reaktoren durchgeführt werden. Sie kann absatzweise oder bevorzugt kontinuierlich in einer oder mehreren Stufen erfolgen. Es kommen Lösungsverfahren, Suspensionsverfahren, gerührte Gasphasenverfahren oder Gasphasenwirbelschichtverfahren in Betracht. Als Lösungsmittel oder Suspensionsmittel können inerte Kohlenwasserstoffe, wie beispielsweise iso-Butan, oder aber die Monomeren selbst verwendet werden.

In der Regel werden die Polymerisationen bei Temperaturen im Bereich von 20 bis 150°C und Drücken im Bereich von 1 bis 100 bar mit mittleren Verweilzeiten von 0,5 bis 5 Stunden durchgeführt. Bevorzugt sind dabei Temperaturen von 60 bis 90°C, Drücke von 20 bis 35 bar und mittlere Verweilzeiten von 0,5 bis 3 Stunden. Es können bei der Polymerisation auch Molmassenregler, beispielsweise Wasserstoff, oder übliche Zuschlagstoffe wie Antistatika mitverwendet werden.

Die erfindungsgemäßen Katalysatorfeststoffe zeichnen sich dadurch aus, daß sie sich nach einem wenig aufwendigen Verfahren herstellen lassen, sie bei der Polymerisation von Olefinen Polymerisate mit einer guten Morphologie liefern und die erhaltenen Polymerisate nur sehr wenig partikuläre Katalysatorrückstände aufweisen. Die erhältlichen Polymerisate eignen sich somit zur Herstellung von Formkörpern und insbesondere von Folien und Fasern.

### Beispiele

Alle präparativen Arbeiten wurden nach Standard-Schlenktechniken in inertisierten Glasgefäßen unter Stickstoff- oder Argon-Schutzgasatmosphäre durchgeführt.

Zur Charakterisierung der Proben wurden folgende Prüfungen durchgeführt:
Bestimmung des mittleren Teilchendurchmessers:
   Zur Bestimmung des mittleren Teilchendurchmessers wurde durch Coulter-Counter-Analyse nach ASTM Standard D 4438 die Korngrößenverteilung ermittelt und daraus der volumenbezogene Mittelwert (Medianwert) berechnet.
Bestimmung des Porenvolumens:
   Durch Quecksilber-Porosimetrie nach DIN 66133
Bestimmung der spezifischen Oberfläche:
   Durch Stickstoff-Adsorption nach DIN 66131
Bestimmung der Schmelztemperatur:
   Die Schmelztemperatur wurde durch DSC-Messung nach ISO-Norm 3146 mit einem ersten Aufheizen mit einer Aufheizrate von 20°C pro Minute bis 200°C, einer dynamische Kristallisation mit einer Kühlrate von 20°C pro Minute bis 25°C und einem zweiten Aufheizen mit einer Aufheizrate von 20°C pro Minute wiederum bis 200°C ermittelt. Die Schmelztemperatur ist dann die Temperatur, bei der die beim zweiten Aufheizen gemessene Kurve der Enthalpie gegen die Temperatur das Maximum aufweist.
Bestimmung der Breite der Molmassenverteilung (Q-Wert):
   Die Gelpermeationschromatographie (GPC) bei 145°C wurde bei 145°C in 1,2,4-Trichlorbenzol durchgeführt, wobei eine GPC-Apparatur 150C der Fa. Waters zum Einsatz kam. Die Auswertung der Daten erfolgte mit der Software win-GPC der Fa. HS-Entwicklungsgesellschaft für wissenschaftliche Hard- und Software mbH, Ober-Hilbersheim. Die Kalibrierung der Säulen erfolgte mittels Polypropylenstandards mit Molmassen von 100 bis 10⁷ g/mol.
   Es wurden Massenmittel (M_{w}) und Zahlenmittel (Mₙ) der Molmassen der Polymerisate bestimmt. Der Q-Wert ist das Verhältnis von Massenmittel (M_{w}) zu Zahlenmittel (Mₙ).
Bestimmung des Druckanstiegs bei der Schmelzefiltration:
   Die Bestimmung des Druckanstiegs bei der Schmelzefiltration erfolgte durch Extrusion der Polypropylens in einem Standard-Laborextruder (3-Zonenschnecke) bei 265°C durch eine Metallfilterronde mit Stützgewebe mit einer Maschenweite von 5 µm bei einer Durchsatzrate von 2 kg/h. Der Druckanstieg wurde dabei für 1 Stunde bei gleicher Polypropylen-Durchsatzrate über die Zeit aufgenommen.

### Beispiel 1

### a) Herstellung des MgCl₂-Trägers

In einem Rundkolben wurden 48 g wasserfreies Magnesiumchlorid (Fa. Aldrich) mit 77 g wasserfreiem Ethanol in einer Mischung aus 50 ml Silikonöl (Typ AK 350 der Fa. Wacker) und 50 ml Paraffinöl (DAB-10-530) suspendiert, wobei eine exotherme Reaktion auftrat. Die Mischung wurde unter Rühren auf 120°C erhitzt und als homogene Schmelze in ein zweites Reaktionsgefäß überführt, das 400 ml der beschriebenen 1:1 Mischung aus Paraffin und Silikonöl enthielt, die ebenfalls auf 120°C temperiert war. Unter heftigem Rühren mittels eines Ultraturrax-Rührers wurde die MgCl₂·3EtOH-Schmelze für ca. 5 min in dem Ölgemisch suspendiert und anschließend schnell in ca. 2 1 kaltes (-78°C) Heptan geleitet. Hierbei wurde die Temperatur unterhalb von 0°C gehalten. Die abgeschreckte MgCl₂·3EtOH-Suspension fiel als weißer Feststoff an, der über eine Glasfritte abfiltriert wurde. Der Feststoff wurde einmal mit 50 ml Heptan und zweimal mit je 50 ml Pentan gewaschen und dann im Stickstoffstrom getrocknet. Es wurden 158 g eines weißen, extrem hygroskopischen Feststoffs erhalten. Unter dem Mikroskop konnten ausschließlich sphärische Partikel beobachtet werden. Die Elementaranalyse ergab einen Komplex der Stöchiometrie MgCl₂·2,5 EtOH.

Der mittlere Teilchendurchmesser betrug 50 µm, die spezifische Oberfläche 250 m²/g und das Porenvolumen 0,4 ml/g.

### b) Herstellung des Katalysatorfeststoffs

10 g des in Beispiel 1 a) erhaltenen sphärischen MgCl₂·2,5 EtOH wurden in 30 ml Toluol suspendiert und tropfenweise mit 80 ml 1,53-molarer MAO-Lösung in Toluol (Fa. Witco) versetzt, wobei die Temperatur nicht über 35°C stieg. Es wurde nur eine geringe Gasentwicklung festgestellt. Dann wurde bei Raumtemperatur 6 Stunden gerührt, filtriert, 2 mal mit Toluol gewaschen und im N₂-Strom bis zur Rieselfähigkeit getrocknet.
Ausbeute: 11 g.

5,5 g dieses Feststoffs wurden auf einer Säule mit Glasfritte, die am unteren Ende mit einem Hahn verschlossen war, vorsichtig mit einer Lösung aus 249 mg rac-Dimethylsilandiylbis(2-methyl-4,5-benzindenyl)zirkoniumdichlorid in 40,9 ml 1,53-molarer MAO-Lösung überschichtet. Der Hahn wurde geöffnet, und man ließ die Flüssigkeit langsam ablaufen. Sobald die ersten gefärbten Tropfen abliefen, wurde der Hahn geschlossen. Der sich oberhalb der Glasfritte befindende Inhalt der Säule wurde vermischt und 12 Stunden stehen gelassen. Anschließend wurde filtriert, 2 mal mit Pentan gewaschen und im N₂-Strom getrocknet.
Ausbeute: 6,6 g eines tieforange gefärbten Pulvers

### c) Polymerisation

Ein 10-Liter-Autoklaven wurde mit Stickstoff gespült. Danach wurden im Stickstoffgegenstrom zunächst 10 ml einer 2-molaren Lösung von Triisobutylaluminium und anschließend 300 mg des in Beispiel 1 b) hergestellten Katalysatorfeststoffs in den Autoklaven gegeben. Dann wurden 7 1 flüssiges Propylen in den Autoklaven gefüllt. Der Autoklav wurde aufgeheizt, bis die Innentemperatur 65°C betrug. Es wurde 90 Minuten polymerisiert. Nach Entspannen des Autoklaven wurden 110 g eines Polypropylens erhalten. Die Morphologie war ausgezeichnet.

Die Schmelztemperatur betrug 143,9°C und der Q-Wert (das Verhältnis M_{w}/Mₙ) 2,0. Bei der Schmelzefiltration ergab sich ein Druckanstieg von 1 bar/kg Polypropylen.

### Beispiel 2

### a) Herstellung des MgCl₂-Trägers

20 g der in Beispiel 1 a) erhaltenen feinteiligen Trägerpartikel wurden bei Raumtemperatur 2 Stunden bei 1 mbar getrocknet. Hierdurch erniedrigte sich der Gehalt an Ethanol. Es wurde ein sphärischer Träger der Stöchiometrie MgCl₂·1,9 EtOH erhalten.

Der mittlere Teilchendurchmesser betrug 50 µm, die spezifische Oberfläche 270 m²/g und das Porenvolumen 0,5 ml/g.

### b) Herstellung des Katalysatorfeststoffs

Das in Beispiel 1 b) beschriebene Verfahren wurde unter identischen Bedingungen mit 10 g der in Beispiel 2 a) erhaltenen Trägerpartikel wiederholt. Es wurden 6,8 g eines tieforange gefärbten Pulvers erhalten.

### c) Polymerisation

Die in Beispiel 1 c) beschriebene Polymerisation wurde unter identischen Bedingungen wiederholt. Es wurden jedoch 500 mg des in Beispiel 2 b) hergestellten Katalysatorfeststoffs zugegeben.

Nach Entspannen des Autoklaven wurden 480 g eines Polypropylens erhalten. Die Morphologie war sehr gut, das Pulver hatte griesförmige Morphologie. Es wurden keine Brocken oder Beläge nachgewiesen.

Die Schmelztemperatur betrug 144,0°C und der Q-Wert (das Verhältnis M_{w}/Mₙ) 2,1. Bei der Schmelzefiltration ergab sich ein Druckanstieg von 1 bar/kg Polypropylen.

### Vergleichsbeispiel A

### a) Herstellung des MgCl₂-Trägers

20 g der in Beispiel 1 a) erhaltenen feinteiligen Trägerpartikel wurden 24 Stunden bei 40°C und 0,1 mbar getrocknet. Hierdurch erniedrigte sich der Gehalt an Ethanol. Es wurde ein sphärischer Träger der Stöchiometrie MgCl₂·0,9 EtOH erhalten.

Der mittlere Teilchendurchmesser betrug 50 µm, die spezifische Oberfläche 290 m²/g und das Porenvolumen 0,6 ml/g.

### b) Herstellung des Katalysatorfeststoffs

Das in Beispiel 1 b) beschriebene Verfahren wurde unter identischen Bedingungen mit 10 g der in Beispiel A a) erhaltenen Trägerpartikel wiederholt. Es wurden 4,5 g eines tieforange gefärbten Pulvers erhalten.

### c) Polymerisation

Die in Beispiel 1 c) beschriebene Polymerisation wurde unter identischen Bedingungen wiederholt. Es wurden jedoch 350 mg des in Beispiel A b) hergestellten Katalysatorfeststoffs zugegeben.

Nach Entspannen des Autoklaven wurden 150 g eines Polypropylens erhalten. Der Polymergries enthielt etwa 10 Gew.-% Bröckchen mit einem Durchmesser von mehr als 5 cm.

Die Schmelztemperatur betrug 144,5°C und der Q-Wert (das Verhältnis M_{w}/Mₙ) 2,6. Bei der Schmelzefiltration ergab sich ein Druckanstieg von 5 bar/kg Polypropylen.

### Vergleichsbeispiel B

### a) Herstellung des MgCl₂-Trägers

Die Herstellung des MgCl₂-Trägers erfolgt nach dem in Beispiel 1 a) der EP-A 435 514 angegebenen Verfahren. Es wurde ein feines Pulver erhalten.

### b) Herstellung des Katalysatorfeststoffs

Das in Beispiel 1 b) beschriebene verfahren wurde unter identischen Bedingungen mit 10 g der in Beispiel B a) erhaltenen Trägerpartikel wiederholt. Es wurden 7 g eines tieforange gefärbten Pulvers erhalten.

### c) Polymerisation

Die in Beispiel 1 c) beschriebene Polymerisation wurde unter identischen Bedingungen wiederholt. Es wurden jedoch 300 mg des in Beispiel B b) hergestellten Katalysatorfeststoffs zugegeben.

Nach Entspannen des Autoklaven wurden 150 g eines Polypropylens (Gries) erhalten, der etwa 15 Gew.-% Brocken enthielt. Am Rührer befanden sich etwa 10 g eines Belags, der eine Schmelztemperatur von 149°C aufwies.

### Vergleichsbeispiel C

### a) Trägermaterial

Als Trägermaterial wurde Kieselgel S 2101 der Fa. Grace GmbH, Worms eingesetzt.

### b) Herstellung des Katalysatorfeststoffs

Das in Beispiel 1 b) beschriebene Verfahren wurde unter identischen Bedingungen mit 10 g des unter C a) definierten Kieselgels wiederholt. Es wurden 18 g eines tieforange gefärbten Pulvers erhalten.

### c) Polymerisation

Die in Beispiel 1 c) beschriebene Polymerisation wurde unter identischen Bedingungen wiederholt. Es wurden jedoch 250 mg des in Beispiel C b) hergestellten Katalysatorfeststoffs zugegeben.

Nach Entspannen des Autoklaven wurden 1500 g eines Polymergrieses erhalten, der keine Brocken enthielt.

Die Schmelztemperatur betrug 144,5°C und der Q-Wert (das Verhältnis M_{w}/Mₙ) 2,0. Bei der Schmelzefiltration ergab sich ein Druckanstieg von 15 bar/kg Polypropylen.

## Patentansprüche

1. Verfahren zur Herstellung eines Katalysatorfeststoffs zur Olefinpolymerisation enthaltend
A) mindestens ein Magnesiumhalogenid,
B) mindestens einen Metallocenkomplex und
C) mindestens eine metalloceniumionenbildende Verbindung,
**dadurch gekennzeichnet, daß** man
i) zunächst nur aus dem Magnesiumhalogenid A) und einem C₁-C₈-Alkanol bestehende feinteilige Trägerpartikel mit einem mittleren Teilchendurchmesser von 1 bis 200 µm aus einem Addukt aus dem Magnesiumhalogenid A) und dem C₁-C₈-Alkanol herstellt, wobei dieses pro Mol Magnesiumhalogenid von 1,5 bis 5 mol des C₁-C₈-Alkanols enthält,
ii) dann die metalloceniumionenbildende Verbindung C) auf den feinteiligen Trägerpartikeln abscheidet und
iii)danach das hierbei erhaltene Reaktionsprodukt mit dem Metallocenkomplex B) in Kontakt bringt.

2. Verfahren nach Anspruch 1, **dadurch gekennzeichnet, daß** man als Magnesiumhalogenid A) Magnesiumchlorid verwendet.

3. Verfahren nach Anspruch 1 oder 2, **dadurch gekennzeichnet, daß** man als Metallocenkomplex B) eine Verbindung der allgemeinen Formel (I) verwendet, 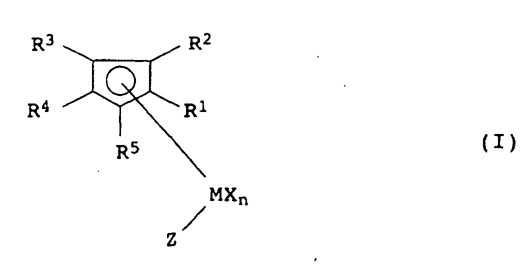 in der die Substituenten und Indizes folgende Bedeutung haben:
M Titan, Zirkonium, Hafnium, Vanadium, Niob oder Tantal, sowie Elemente der III. Nebengruppe des Periodensystems und der Lanthanoiden,
X Fluor, Chlor, Brom, Iod, Wasserstoff, C₁-C₁₀-Alkyl, C₆-C₁₅-Aryl, Alkylaryl mit 1 bis 10 C-Atomen im Alkylrest und 6 bis 20 C-Atomen im Arylrest, -OR⁶ oder -NR⁶R⁷,
n 1, 2 oder 3, wobei n der Wertigkeit von M minus der Zahl 2 entspricht,
wobei
R⁶ und R⁷ C₁-C₁₀-Alkyl, C₆-C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeuten und
die Reste X gleich oder verschieden sind,
R¹ bis R⁵ Wasserstoff, C₁-C₁₀-Alkyl, 5- bis 7-gliedriges Cycloalkyl, das seinerseits durch C₁-C₁₀-Alkyl substituiert sein kann, C₆-C₁₅-Aryl oder Arylalkyl, wobei auch zwei benachbarte Reste gemeinsam für 4 bis 15 C-Atome aufweisende gesättigte oder ungesättigte cyclische Gruppen stehen können, oder Si(R⁸)₃ mit
R⁸ C₁-C₁₀-Alkyl, C₃-C₁₀-Cycloalkyl oder C₆-C₁₅-Aryl sein kann und
Z für X oder 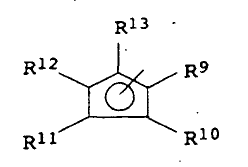 steht,
wobei die Reste
R⁹ bis R¹³ Wasserstoff, C₁-C₁₀-Alkyl, 5- bis 7-gliedriges Cycloalkyl, das seinerseits durch C₁-C₁₀-Alkyl substituiert sein kann, C₆-C₁₅-Aryl oder Arylalkyl bedeuten und wobei auch zwei benachbarte Reste gemeinsam für 4 bis 15 C-Atome aufweisende gesättigte oder ungesättigte cyclische Gruppen stehen können, oder Si(R¹⁴)₃ mit
R¹⁴ C₁-C₁₀-Alkyl, C₃-C₁₀-Cycloalkyl oder C₆-C₁₅-Aryl bedeuten,
oder wobei die Reste R⁴ und Z gemeinsam eine Gruppierung -R¹⁵-A- bilden, in der
R¹⁵ 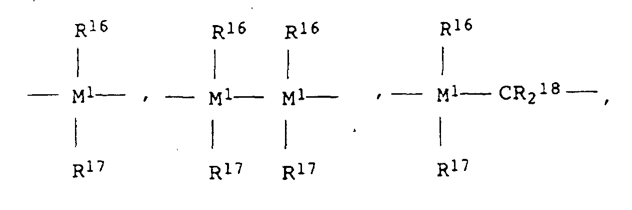 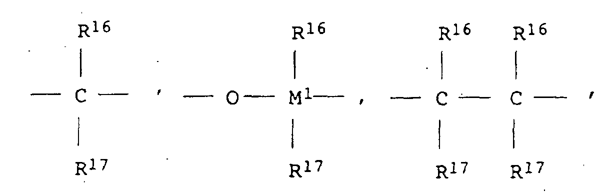 = BR¹⁶, = AlR¹⁶, -Ge-, -Sn-, -O-, -S-, = SO, = SO₂, = NR¹⁶, = CO, = PR¹⁶ oder = P(O)R¹⁶ ist,
wobei
R¹⁶, R¹⁷ und R¹⁸ gleich oder verschieden sind und jeweils ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder wobei zwei benachbarte Reste jeweils mit den sie verbindenden Atomen einen 4 bis 15 C-Atome aufweisenden gesättigten oder ungesättigten Ring bilden, und
M¹ Silicium, Germanium oder Zinn ist,
A -O-, -S-, 〉NR¹⁹ oder 〉PR¹⁹ bedeuten,
mit
R¹⁹ C₁-C₁₀-Alkyl, C₆-C₁₅-Aryl, C₃-C₁₀-Cycloalkyl, C₇-C₁₈-Alkylaryl oder Si(R²⁰)₃,
R²⁰ Wasserstoff, C₁-C₁₀-Alkyl, C₆-C₁₅-Aryl, das seinerseits mit C₁-C₄-Alkylgruppen substituiert sein kann oder C₃-C₁₀-Cycloalkyl
oder wobei die Reste R⁴ und R¹² gemeinsam eine Gruppierung -R¹⁵- bilden.

4. Verfahren nach den Ansprüchen 1 bis 3, **dadurch gekennzeichnet, daß** man als metalloceniumionenbildende Verbindung C) offenkettige oder cyclische Alumoxanverbindungen der allgemeinen Formel (IV) oder (V) verwendet, 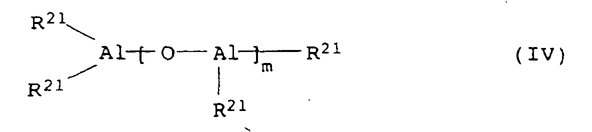 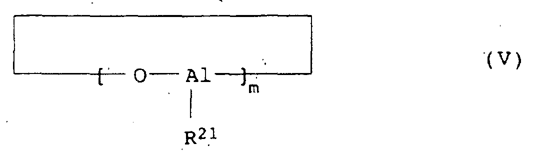 in denen
R²¹ eine C₁-C₄-Alkylgruppe bedeutet und m für eine ganze Zahl von 5 bis 30 steht.

5. Verfahren nach den Ansprüchen 1 bis 4, **dadurch gekennzeichnet, daß** der Katalysatorfeststoff als weitere Komponente D) eine oder mehrere Metallverbindungen der allgemeinen Formel (VI),
M³ (R²²)ᵣ (R²³)ₛ (R²⁴)ₜ (VI)
in der
M³ ein Alkali-, ein Erdalkalimetall oder ein Metall der III. Hauptgruppe des Periodensystems bedeutet,
R²² Wasserstoff, C₁-C₁₀-Alkyl, C₆-C₁₅-Aryl, Alkylaryl oder Arylalkyl mit jeweils 1 bis 10 C-Atomen im Alkylrest und 6 bis 20 C-Atomen im Arylrest,
R²³ und R²⁴ Wasserstoff, Halogen, C₁-C₁₀-Alkyl, C₆-C₁₅-Aryl, Alkylaryl, Arylalkyl oder Alkoxy mit jeweils 1 bis 10 C-Atomen im Alkylrest und 6 bis 20 C-Atomen im Arylrest,
r eine ganze Zahl von 1 bis 3
und
s und t ganze Zahlen von 0 bis 2 bedeuten, wobei die Summe r+s+t der Wertigkeit von M³ entspricht,
enthält,
wobei man die Metallverbindungen D) im Verfahrensschritt ii) zusammen mit der metalloceniumionenbildende Verbindung C) und/oder im Verfahrensschritt iii) zusammen mit dem Metallocenkomplex B) zugibt oder
man im Verfahrensschritt ii) die Metallverbindungen D) anstelle der metalloceniumionenbildende Verbindung C) einsetzt und dann den Metallocenkomplex B) und die metalloceniumionenbildende Verbindung C) zusammen im Verfahrensschritt iii) zugibt.

6. Verfahren nach den Ansprüchen 1 bis 5, **dadurch gekennzeichnet, daß** man als C₁-C₈-Alkanol Ethanol verwendet.

7. Katalysatorfeststoff zur Olefinpolymerisation, erhältlich nach einem Verfahren gemäß den Ansprüchen 1 bis 6.

8. Verwendung des Katalysatorfeststoffs nach Anspruch 7 zur Polymerisation oder Copolymerisation von Olefinen.

9. Verfahren zur Herstellung von Polyolefinen durch Polymerisation oder Copolymerisation von Olefinen in Gegenwart eines Katalysatorfeststoffs nach Anspruch 7.

## Claims

1. A process for preparing a catalyst solid for olefin polymerization comprising
A) at least one magnesium halide,
B) at least one metallocene complex and
C) at least one compound capable of forming metallocenium ions,
which comprises
i) firstly preparing finely divided support particles consisting solely of the magnesium halide A) and a C₁-C₈-alkanol and having a mean particle diameter of from 1 to 200 µm from an adduct of the magnesium halide A) and a C₁-C₈-alkanol, where the adduct contains from 1.5 to 5 mol of the C₁-C₈-alkanol per mole of magnesium halide,
ii) then depositing the compound C) capable of forming metallocenium ions on the finely divided support particles and
iii)subsequently bringing the reaction product obtained in this way into contact with the metallocene complex B).

2. A process as claimed in claim 1, wherein magnesium chloride is used as magnesium halide A).

3. A process as claimed in claim 1 or 2, wherein a compound of the formula (I), 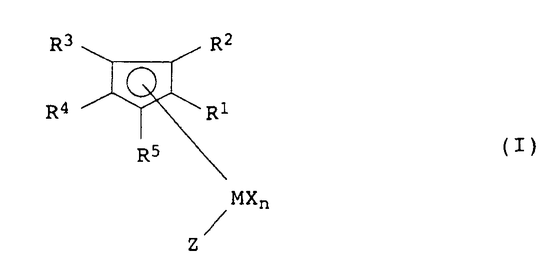 where the substituents and indices have the following meanings:
M is titanium, zirconium, hafnium, vanadium, niobium or tantalum, or an element of transition group III of the Periodic Table or the lanthanides,
X is fluorine, chlorine, bromine, iodine, hydrogen, C₁-C₁₀-alkyl, C₆-C₁₅-aryl, alkylaryl having from 1 to 10 carbon atoms in the alkyl radical and from 6 to 20 carbon atoms in the aryl radical, -OR⁶ or -NR⁶R⁷,
n is 1, 2 or 3 and corresponds to the valence of M minus 2,
where
R⁶ and R⁷ are C₁-C₁₀-alkyl, C₆-C₁₅-aryl, alkylaryl, arylalkyl, fluoroalkyl or fluoroaryl each having from 1 to 10 carbon atoms in the alkyl radical and from 6 to 20 carbon atoms in the aryl radical and
the radicals X are identical or different,
R¹ to R⁵ are hydrogen, C₁-C₁₀-alkyl, 5- to 7-membered cycloalkyl which may in turn bear C₁-C₁₀-alkyl groups as substituents, C₆-C₁₅-aryl or arylalkyl, where two adjacent radicals may also together form a saturated or unsaturated cyclic group having from 4 to 15 carbon atoms, or Si(R⁸)₃ where
R⁸ can be C₁-C₁₀-alkyl, C₃-C₁₀-cycloalkyl or C₆-C₁₅-aryl, and
Z is as defined for X or 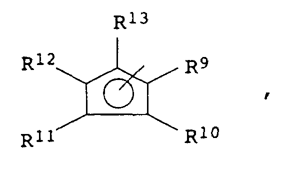
where the radicals
R⁹ to R¹³ are hydrogen, C₁-C₁₀-alkyl, 5- to 7-membered cycloalkyl which may in turn bear C₁-C₁₀-alkyl groups as substituents, C₆-C₁₅-aryl or arylalkyl, where two adjacent radicals may also together form a saturated or unsaturated cyclic group having from 4 to 15 carbon atoms, or Si(R¹⁴)₃ where
R¹⁴ is C₁-C₁₀-alkyl, C₃-C₁₀-cycloalkyl or C₆-C₁₅-aryl,
or the radicals R⁴ and Z together form a -R¹⁵-A- group, where
R¹⁵ is 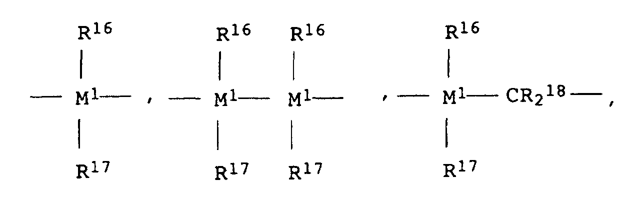 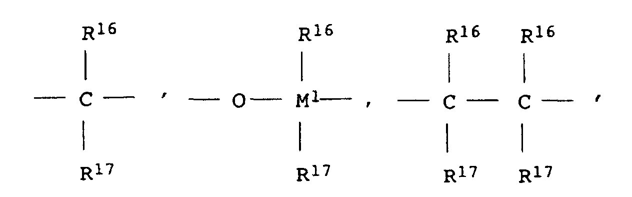 = BR¹⁶, = AlR¹⁶, -Ge-, -Sn-, -O-, -S-, = SO, - SO₂,
= NR¹⁶, = CO, = PR¹⁶ or = P(O)R¹⁶,
where
R¹⁶, R¹⁷ and R¹⁸ are identical or different and are each a hydrogen atom, a halogen atom, a C₁-C₁₀-alkyl group, a C₁-C₁₀-fluoroalkyl group, a C₆-C₁₀-fluoroaryl group, a C₆-C₁₀-aryl group, a C₁-C₁₀-alkoxy group, a C₂-C₁₀-alkenyl group, a C₇-C₄₀-arylalkyl group, a C₈-C₄₀-arylalkenyl group or a C₇-C₄₀-alkylaryl group or two adjacent radicals together with the atoms connecting them form a saturated or unsaturated ring having from 4 to 15 carbon atoms, and
M¹ is silicon, germanium or tin,
A is -O-, -S-, 〉NR¹⁹ or 〉PR¹⁹,
where
R¹⁹ is C₁-C₁₀-alkyl, C₆-C₁₅-aryl, C₃-C₁₀-cycloalkyl, C₇-C₁₈-alkylaryl or Si(R²⁰)₃,
R²⁰ is hydrogen, C₁-C₁₀-alkyl, C₆-C₁₅-aryl which may in turn bear C₁-C₄-alkyl groups as substituents or C₃-C₁₀-cycloalkyl
or the radicals R⁴ and R¹² together form a -R¹⁵- group,
is used as metallocene complex B).

4. A process as claimed in any of claims 1 to 3, wherein open-chain or cyclic aluminoxane compounds of the formula (IV) or (V), 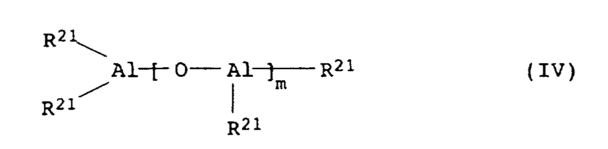 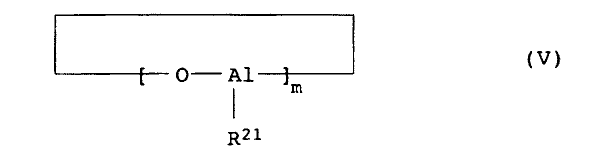 where
R²¹ is a C₁-C₄-alkyl group and m is an integer from 5 to 30,
are used as compound C) capable of forming metallocenium ions.

5. A process as claimed in any of claims 1 to 4, wherein the catalyst solid further comprises one or more metal compounds of the formula (VI),
M³ (R²²)ᵣ (R²³)ₛ (R²⁴)ₜ (VI)
where
M³ is an alkali metal, an alkaline earth metal or a metal of main group III of the Periodic Table,
R²² is hydrogen, C₁-C₁₀-alkyl, C₆-C₁₅-aryl, alkylaryl or arylalkyl each having from 1 to 10 carbon atoms in the alkyl radical and from 6 to 20 carbon atoms in the aryl radical,
R²³ and R²⁴ are hydrogen, halogen, C₁-C₁₀-alkyl, C₆-C₁₅-aryl, alkylaryl, arylalkyl or alkoxy each having from 1 to 10 carbon atoms in the alkyl radical and from 6 to 20 carbon atoms in the aryl radical,
r is an integer from 1 to 3
and
s and t are integers from 0 to 2, where the sum r+s+t corresponds to the valence of M³,
as additional component D), where the metal compounds D) are added in process step ii) together with the compound C) capable of forming metallocenium ions and/or in process step iii) together with the metallocene complex B) or
the metal compounds D) are used in place of the compound C) capable of forming metallocenium ions in process step ii) and the metallocene complex B) and the compound C) capable of forming metallocenium ions are then added together in process step iii).

6. A process as claimed in any of claims 1 to 5, wherein ethanol is used as C₁-C₈-alkanol.

7. A catalyst solid for olefin polymerization which is obtainable by a process as claimed in any of claims 1 to 6.

8. The use of a catalyst solid as claimed in claim 7 for the polymerization or copolymerization of olefins.

9. A process for preparing polyolefins by polymerization or copolymerization of olefins in the presence of a catalyst solid as claimed in claim 7.

## Revendications

1. Procédé de production d'une matière solide de catalyseur pour la polymérisation d'oléfines, contenant
A) au moins un halogénure de magnésium,
B) au moins un complexe de métallocène et
C) au moins un composé formant des ions métallocénium,
**caractérisé en ce que**
i) l'on prépare d'abord des particules de support finement divisées, ayant une granulométrie moyenne de 1 µm à 200 µm, composées uniquement de l'halogénure de magnésium A) et d'un alcanol en C₁ à C₈ à partir d'un produit d'addition de l'halogénure de magnésium A) et de l'alcanol en C₁ à C₈, ce produit d'addition contenant 1,5 mole à 5 moles de l'alcanol en C₁ à C₈ par mole d'halogénure de magnésium,
ii) l'on dépose ensuite le composé formant des ions métallocénium C) sur les particules de support finement divisées et
iii) l'on met ensuite le produit réactionnel ainsi obtenu en contact avec le complexe de métallocène B).

2. Procédé selon la revendication 1, **caractérisé en ce que** l'on utilise du chlorure de magnésium en tant qu'halogénure de magnésium A).

3. Procédé selon la revendication 1 ou 2, **caractérisé en ce que** l'on utilise en tant que complexe de métallocène B) un composé de formule générale (I) 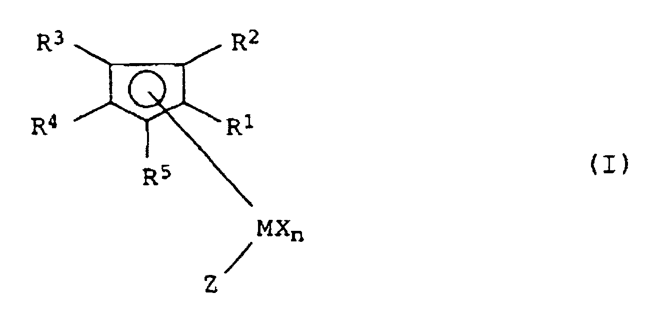 dans laquelle les substituants et les indices ont les significations suivantes :
M représente un atome de titane, de zirconium, d'hafnium, de vanadium, de niobium ou de tantale, ainsi que des éléments du sous-groupe III de la Classification Périodique des Eléments et des lanthanides,
X représente un atome de fluor, de chlore, de brome, d'iode, d'hydrogène, un groupe alkyle en C₁ à C₁₀, un groupe aryle en C₆ à C₁₅, un groupe alkylaryle ayant 1 à 10 atomes de carbone dans la fraction alkyle et 6 à 20 atomes de carbone dans la fraction aryle, -OR⁶ ou -NR⁶R⁷,
n vaut 1, 2 ou 3, n correspondant à la valence de M moins 2, où
R⁶ et R⁷ représentent un groupe alkyle en C₁ à C₁₀, aryle en C₆ à C₁₅, alkylaryle, arylalkyle, fluoroalkyle ou fluoroaryle ayant chacun 1 à 10 atomes de carbone dans la fraction alkyle et 6 à 20 atomes de carbone dans la fraction aryle et
les groupes X sont identiques ou différents,
R¹ à R⁵ représentent un atome d'hydrogène, un groupe alkyle en C₁ à C₁₀, un groupe cycloalkyle de 5 à 7 éléments, qui peut être substitué quant à lui par un groupe alkyle en C₁ à C₁₀, un groupe aryle en C₆ à C₁₅ ou arylalkyle, deux groupes vicinaux pouvant représenter conjointement des groupes cycliques saturés ou insaturés présentant 4 à 15 atomes de carbone, ou Si(R⁸)₃, où
R⁸ représente un groupe alkyle en C₁ à C₁₀, cycloalkyle en C₃ à C₁₀ ou aryle en C₆ à C₁₅ et
Z représente X ou 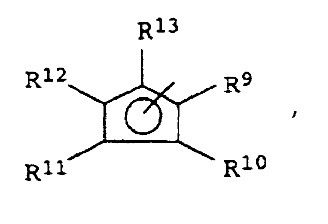
où les groupes
R⁹ à R¹³ représentent un atome d'hydrogène, un groupe alkyle en C₁ à C₁₀, un groupe cycloalkyle de 5 à 7 éléments, qui peut être substitué quant à lui par un groupe alkyle en C₁ à C₁₀, un groupe aryle en C₆ à C₁₅ ou arylalkyle, et deux groupes vicinaux pouvant représenter conjointement des groupes cycliques saturés ou insaturés présentant 4 à 15 atomes de carbone, ou Si(R¹⁴)₃, où
R¹⁴ représente un groupe alkyle en C₁ à C₁₀, cycloalkyle en C₃ à C₁₀ ou aryle en C₆ à C₁₅,
ou bien les groupes R⁴ et Z forment ensemble un groupement -R¹⁵-A-, dans lequel
R¹⁵ représente 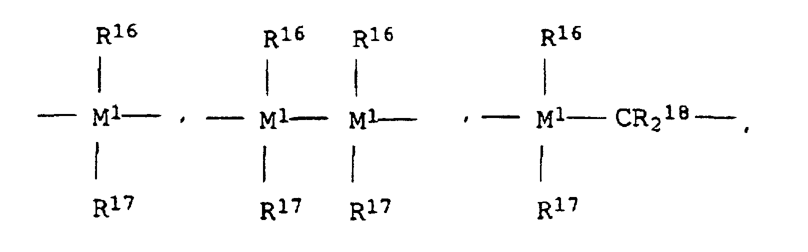 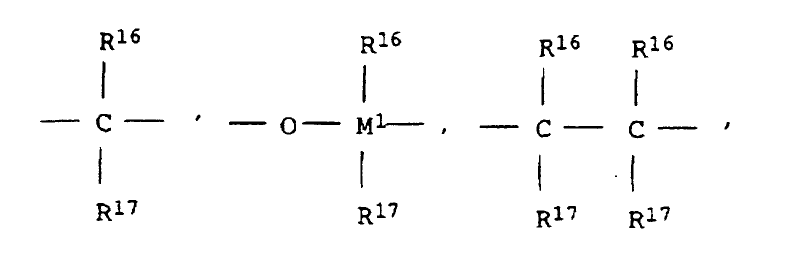 = BR¹⁶, = AlR¹⁶, -Ge-, -Sn-, -O-, -S-, = SO, = SO₂,
= NR¹⁶, = CO, = PR¹⁶ ou = P(O)R¹⁶,
où
R¹⁶, R¹⁷ et R¹⁸ sont identiques ou différents et représentent chacun un atome d'hydrogène, un atome d'halogène, un groupe alkyle en C₁ à C₁₀, un groupe fluoroalkyle en C₁ à C₁₀, un groupe fluoroaryle en C₆ à C₁₀, un groupe aryle en C₆ à C₁₀, un groupe alcoxy en C₁ à C₁₀, un groupe alcényle en C₂ à C₁₀, un groupe arylalkyle en C₇ à C₄₀, un groupe arylalcényle en C₈ à C₄₀ ou un groupe alkylaryle en C₇ à C₄₀, ou deux groupes vicinaux forment, avec les atomes qui les lient, un cycle saturé ou insaturé présentant 4 à 15 atomes de carbone, et
M¹ représente un atome de silicium, de germanium ou d'étain,
A représente -O-, -S-, 〉NR¹⁹ ou 〉PR¹⁹,
où
R¹⁹ représente un groupe alkyle en C₁ à C₁₀, aryle en C₆ à C₁₅, cycloalkyle en C₃ à C₁₀, alkylaryle en C₇ à C₁₈ ou Si(R²⁰)₃,
R²⁰ représente un atome d'hydrogène, un groupe alkyle en C₁ à C₁₀, aryle en C₆ à C₁₅, qui peut être substitué quant à lui par des groupes alkyle en C₁ à C₄, ou un groupe cycloalkyle en C₃ à C₁₀,
ou bien les groupes R⁴ et R¹² forment ensemble un groupement -R¹⁵-.

4. Procédé selon les revendications 1 à 3, **caractérisé en ce que** l'on utilise, en tant que composé formant des ions métallocénium C), des composés d'aluminoxane à chaîne ouverte ou cycliques de formule générale (IV) ou (V) 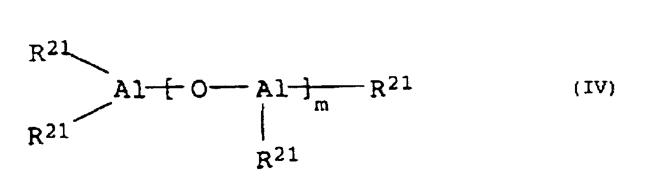 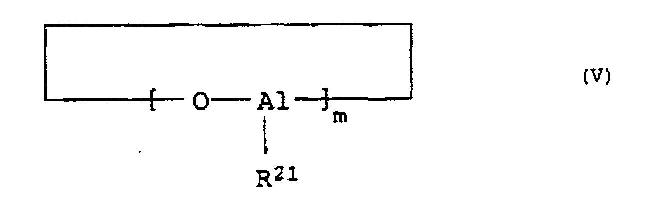 dans lesquelles
R²¹ représente un groupe alkyle en C₁ à C₄ et m représente un nombre entier de 5 à 30.

5. Procédé selon les revendications 1 à 4, **caractérisé en ce que** la matière solide de catalyseur contient, en tant que composant D) supplémentaire, un ou plusieurs composés métalliques de formule générale (VI)
M³(R²²)ᵣ(R²³)ₛ(R²⁴)ₜ (VI),
dans laquelle
M³ représente un atome de métal alcalin, alcalino-terreux ou de métal du groupe principal III de la Classification Périodique des Eléments,
R²² représente un atome d'hydrogène, un groupe alkyle en C₁ à C₁₀, aryle en C₆ à C₁₅, alkylaryle ou arylalkyle ayant chacun 1 à 10 atomes de carbone dans la fraction alkyle et 6 à 20 atomes de carbone dans la fraction aryle,
R²³ et R²⁴ représentent un atome d'hydrogène, d'halogène, un groupe alkyle en C₁ à C₁₀, aryle en C₆ à C₁₅, alkylaryle, arylalkyle ou alcoxy ayant chacun 1 à 10 atomes de C dans la fraction alkyle et 6 à 20 atomes dans la fraction aryle,
r représente un nombre entier de 1 à 3, et
s et t représentent des nombres entiers de 0 à 2, la somme de r + s + t correspondant à la valence de M³,
dans lequel on introduit les composés métalliques D) dans l'étape de procédé ii) conjointement avec le composé formant des ions métallocénium C) et/ou dans l'étape de procédé iii) conjointement avec le complexe de métallocène B) ou
on met en oeuvre les composés métalliques D) dans l'étape de procédé ii) à la place du composé formant des ions métallocénium C) et on ajoute ensuite le complexe de métallocène B) et le composé formant des ions métallocénium C) conjointement dans l'étape de procédé iii).

6. Procédé selon les revendications 1 à 5, **caractérisé en ce que** l'on utilise de l'éthanol en tant qu'alcanol en C₁ à C₈.

7. Matière solide de catalyseur pour la polymérisation d'oléfines, pouvant être obtenue à l'aide d'un procédé selon les revendications 1 à 6.

8. Utilisation de la matière solide de catalyseur selon la revendication 7 pour la polymérisation ou la copolymérisation d'oléfines.

9. Procédé de production de polyoléfines au moyen d'une polymérisation ou d'une copolymérisation d'oléfines en présence d'une matière solide de catalyseur selon la revendication 7.
